# FASCICULE DE BREVET EUROPEEN

(11) **EP 2 790 825 B1**
(45) Date de publication et mention de la délivrance du brevet: **20.02.2019**
(21) Numéro de dépôt: 12815746.8
(22) Date de dépôt: 14.12.2012
(51) Int. Cl.: B01J 23/00, B01D 53/50, B01D 53/56, B01D 53/62, B01D 53/72, B01J 23/10, B01J 37/18, B01D 53/94, F01N 3/10, B01D 53/86

(54) **CATALYSEUR DE TRAITEMENT DE GAZ D'ÉCHAPPEMENT**
KATALYSATOR ZUR REINIGUNG VON ABGASEN
CATALYST FOR PURIFYING EXHAUST GASES

(30) Priorité: 16.12.2011 FR 1161800
(43) Date de publication de la demande: 22.10.2014
(73) Titulaire: Saint-Gobain Centre De Recherches Et D'etudes Europeen, 92400 Courbevoie (FR); Centre National de la Recherche Scientifique, 75794 Paris Cedex 16 (FR)
(72) Inventeur: PRINCIVALLE, Agnès, F-84800 Lagnes (FR); AUBERT, Daniel, F-84200 Carpentras (FR); GUIZARD, Christian, F-34660 Cournonterral (FR); KAPER, Helena, F-84350 Courthézon (FR); KLOTZ, Michaela, F-84250 Le Thor (FR)
(74) Mandataire: Saint-Gobain Recherche
(86) Numéro de dépôt international: PCT/FR2012/052942
(87) Numéro de publication internationale: WO 2013/088091

(56) Documents cités:
- EP-A1- 0 100 267
- EP-A1- 0 126 676
- EP-A2- 1 378 289
- WO-A1-2011/157964
- WO-A2-2011/064655
- WO-A2-2011/157963
- FR-A1- 2 729 309
- US-B1- 6 458 741

## Description

La présente invention se rapporte au domaine de la purification d'un gaz chargé en polluants gazeux essentiellement du type CO mais aussi COV (composés organiques volatiles), « HC » (hydrocarbures imbrulés), voire les SOx ou les NOx. Plus particulièrement, l'invention se rapporte aux systèmes catalytiques de traitement des gaz à très basse température, typiquement entre l'ambiant et moins de 150°C. Un tel système utilisé peut etre très performant pour le traitement notamment en sortie d'échappement d'un moteur diesel ou essence, permettant l'élimination conjointe ou non du CO et des hydrocarbures imbrulés et les espèces du type NOₓ.

Les techniques et les problèmes liés à la purification des gaz pollués sont bien connus de l'art, qu'il s'agisse de l'air ambiant, notamment dans les habitations ou dans les habitacles ou encore de gaz issus des véhicules motorisés en sortie des lignes d'échappement des véhicules automobiles essence ou diesel, ou d'autres gaz notamment ceux produits par des réacteurs ou des moteurs.

Différentes techniques de traitement des COV sont ainsi présentées dans les techniques de l'ingénieur Doc. J 3 928 en particulier en fonction de la concentration, du débit de gaz et du nombre de polluants à traiter. Une technique bien connue consiste notamment en une oxydation des COV en CO₂ et H₂O, les techniques les plus probantes intégrant un traitement par voie thermique.

On connait ainsi deux publications dans Applied catalysis B :environmental 65(2006) page 37-43 ou B :environmental 73(2007) page 282-291 décrivant des systèmes catalytiques à basse température comportant des métaux précieux sur un matériau support oxyde de titane, oxyde de silicium ou oxyde de zirconium. Les traitements décrits sont principalement destinés à oxyder les formaldéhydes. La charge massique en métaux précieux (notamment Pt Rh ou Au) est égale à au moins 0,6% de la masse du matériau support.

La photocatalyse est aussi un système d'oxydation efficace à basse température du CO et des Composés organiques volatiles (COV). Cependant ce système nécessite l'apport d'un rayonnement UV.

En ce qui concerne l'application dépollution de gaz issus de moteur à combustion, on connait des catalyseurs conventionnels trois voies qui permettent le traitement conjoint des polluants NOₓ, CO et HC et leur conversion en des gaz neutres et chimiquement non nocifs tels que N₂, CO₂ et H₂O. Une très bonne efficacité du système n'est cependant atteinte que par un réglage continuel de la richesse du mélange air-carburant. Il est ainsi connu que le moindre écart par rapport à la stoechiométrie du mélange provoque une forte augmentation des émissions des polluants. De plus ces systèmes fonctionnent mal à basse température, ils restent perfectibles en particulier en phase de démarrage moteur.

L'un des buts de la présente invention est de pallier à des tels manques, en permettant notamment la conversion d'une quantité substantielle des espèces polluantes en particulier du type monoxyde de carbone CO, quelque soit la composition chimique du mélange gazeux à purifier, sans apport d'énergie ou de rayonnement extérieur et ce dès les plus basses températures, voire à l'ambiante (25°C).

On connait du brevet US 5939354A un composé de type perovskite de formule Aₐ₋ₓBₓMO*_{b}* dans lequel A symbolise un ensemble d'éléments du groupe des lanthanides, ledit composé étant obtenu à partir de la bastnaésite, B est un cation monovalent ou divalent et M peut être un métal de transition notamment un métal précieux, en particulier choisi parmi Pt, Pd, Rh ou Au. Les expériences menées par la société déposante ont montré que ces structures de type perovskite sont cependant thermodynamiquement instables et sensibles aux changements d'atmosphère.

La demande internationale WO 2011/068509 décrit un composé multi-phase de formule générale de type Ce_{y}Ln₁₋ₓAₓ₊ₛMO_{z} dans laquelle A est un métal alcalin ou alcalino terreux (pris parmi Mg, Ca, Sr, Ba, Li Na, K, Cs et Rb) et M peut être un métal de transition. Selon un mode particulier le système peut comporter une couche de cérine partiellement substituée notamment par du Zirconium et de l'Yttrium. Le procédé d'obtention consiste à mélanger des précurseurs à sécher puis à chauffer entre 500 et 1000°C.

On connait également de la demande WO 2008/023223 un système catalytique de formule Ce_{1-x-y-z}MₓN_{y}K_{z}O_{2-d}, M, N et K étant des métaux choisis parmi Pd, Pt, Rh, Ru, Zr, Ni et Cu, permettant une conversion des polluants gazeux CO, NO et « HC » à basse température. Il est notamment proposé dans cette publication d'utiliser une cérine comportant dans son réseau cristallin un ou plusieurs métaux catalytiquement actifs en particulier du type métal précieux Pd, Pt ou Rh. Les expériences menées par la société déposante ont cependant montré là encore qu'une telle réalisation est peu stable thermodynamiquement. En particulier, la structure résultante est significativement instable lors de changements brusques d'atmosphère (oxydante à réductrice) ou encore de température. Cette instabilité dans les conditions normales d'un tel catalyseur limite fortement sa possible utilisation comme système catalytique.

La demande européenne EP 1 378 289 A2 décrit des oxydes mixtes (Ce-Sm-Co-Ag et Ce-Sm-Pr-Co-Ag) obtenus comme produits intermédiaires lors de la préparation des catalyseurs des exemples comparatifs. La structure cristalline des produits intermédiaires n'est pas décrite. Les oxydes mixtes ne sont pas soumis à une étape de réduction après calcination.

Il existe donc un besoin pour un système catalytique simple autonome et stable dans ses conditions d'utilisation, permettant notamment l'élimination directe des polluants au moins du type CO, ledit système permettant la conversion sans recours à un matériau supplémentaire adsorbant ces espèces polluantes, de manière très sélective, c'est-à-dire dont plus de 80%, voire plus de 90% molaire, ledit système pouvant fonctionner quelle que soit l'atmosphère globale des gaz à traiter, oxydante, neutre ou réductrice, en particulier oxydante et dans des conditions de très basse température, notamment inférieure à 150°C, voire à l'ambiant. Le système devra par ailleurs présenter une très grande stabilité catalytique dans le temps, c'est-à-dire une très bonne résistance au vieillissement à basse température et quelle que soit l'atmosphère globale citée précédemment.

Selon un premier aspect, la présente invention se rapporte à un système catalytique convenant notamment pour l'élimination des CO, constitué par un oxyde de préférence de structure fluorite, répondant à la formulation molaire:

Ce₁₋ᵤM_{y}A_{z}DᵥO₂₋ₓ,

dans lequel :
- Ce est le Cérium,
- u est compris entre 0,05 et 0,45,
- M représente au moins un élément choisi(s) parmi : Gd, Y, Sc, Sm, Nd, Pr, Zn,
- y est compris entre 0,01 et 0,4,
- A représente au moins un élément possédant plusieurs degrés d'oxydation choisi(s) parmi : Ti, In, Ga, V, Cr, Mn, Fe, Sn, Co, Ni, Cu,
- z est supérieur à 0 et inférieur à 0,4,
- D représente au moins un élément différent de A et choisi(s) parmi : Pt, Pd, Rh, Ru, Cu, Fe Ag et Au,
- v est compris entre 0,001 et 0,4.
- x est supérieur à 0.

Selon l'invention, les métaux, en particulier les métaux précieux, sont disposés en insertion ou en substitution dans le réseau cristallin, l'oxyde comprenant des lacunes en oxygène dans son réseau cristallin.

De préférence, dans la formulation précédente, 1-u est égal à 1-y-z-v.

Ce système présente avantageusement une activité dans tout type d'atmosphère, qu'elle soit oxydante, neutre ou réductrice. Selon un autre avantage, il présente également une activité élevée à très basse température, en particulier à une température inférieure à 70°C.

La résistivité électronique de l'oxyde conducteur ionique et électronique est inférieure à 1000 Ohms.cm à 400°C et sa conductivité ionique est comprise entre 10⁻⁶ et 1 Siemens/cm à 400°C, à la pression atmosphérique.

Les conductivités ionique et électronique peuvent être mesurées par les techniques classiques d'impédance, par exemple telles que décrites dans la publication «Acta Materialia, vol. 56, pages 4658-4672 (2008)».

Selon des modes de réalisations préférés mais non limitatifs de l'invention, qui peuvent être le cas échéant combinés entre eux :
- x est inférieur à 0,5, avantageusement supérieur à 0,05 et inférieur à 0,5 et de manière préférée est compris entre 0,05 et 0,3 de manière très préférée est compris entre 0,1 et 0,3.
- y est compris entre 0,05 et 0,3, de préférence encore entre 0,1 et 0,3.
- z est compris entre 0,01 et 0,2, notamment entre 0,01 et 0,1.
- v est compris entre 0,005 et 0,2, de manière encore plus préféré est compris entre 0,005 et 0,1, voire entre 0,005 et 0,05.
- L'oxyde conducteur ionique et électronique répond à la formule Ce_{1-y-z-v}Y_{y}Ti_{z}DᵥO₂₋ₓ, dans lequel y est compris entre environ 0,1 et environ 0,3 et dans lequel z est compris entre 0,01 et 0,1.
- Un des degrés d'oxydation possible de l'élément A est 4.
- La structure cristalline de l'oxyde du système catalytique selon l'invention est du type fluorite.
- L'oxyde comprend des lacunes en oxygène, une partie mineure des cations Ce⁴⁺ du réseau cristallin, notamment de structure fluorine, pouvant être convertie en cations Ce³⁺, cette proportion étant faible, typiquement inférieure à 10%, voire même inférieure à 1%. De même, une partie des cations Aⁿ⁺ du réseau cristallin peut être convertie en cations A⁽ⁿ⁻¹⁾⁺. De façon bien connue, la présence des différents ions et leur proportion relative peut être mise en évidence notamment par des mesures de susceptibilité magnétique, telles que par exemple décrite dans la publication « Catalysis Today, vol. 54, pages 93-100

(1999)» complétées ou remplacées par des analyses du type TPR (réduction en température programmée) ou par XPS (Spectroscopie de Photon X).
- L'oxyde conducteur ionique et électronique présente une surface spécifique comprise entre 15 et 120 m²/g, de préférence entre 50 et 100 m²/g, tel que déterminé plus particulièrement selon la méthode BET. Cette méthode de mesure de surface spécifique par adsorption de gaz inerte, développée par S.Brunauer, P.H.Emmet et J.Teller, est bien connue de l'homme de la technique.
- A est un élément choisi parmi Ti, V, Cr, Mn, Fe, Sn, Co, Ni, Cu.
- D est un élément choisi parmi Pt, Pd, Rh, Ru, Cu, Fe.
- M est un élément présentant un degré d'oxydation 3 dans le réseau cristallin, en particulier choisi parmi Gd, Y, Sc, Sm, Nd.
- Dans les listes précédemment établies, plusieurs éléments de nature différente constituent la composante D, la composante A ou la composante M, en particulier la composante A. Dans cette dernière configuration, le système catalytique comprend au moins deux éléments choisis parmi : Pt, Pd, Rh, Ru, Cu, Ag, Ni, Fe et Au, v représentant alors la somme des contributions desdits éléments dans la formulation précédente. En particulier selon un mode possible et préféré, le système selon l'invention comprend au moins deux éléments constituant la composante D, un premier élément du type de ceux connus pour favoriser l'oxydation des CO, COV ou HC, en particulier choisi parmi Pt, Pd, Rh et un deuxième élément différent du premier et du type de ceux connus pour favoriser la réduction des NOx en N₂, en particulier choisi parmi le platine, le rhodium voire Cu, Fe ou Ni.

Dans le système catalytique selon l'invention, les métaux, en particulier les métaux précieux, sont disposés en insertion ou en substitution dans le réseau cristallin de préférence du type fluorite, sous forme cationique. Selon un mode possible et avantageux de l'invention, le système catalytique tel que précédemment décrit ne nécessite pas de métaux additionnels déposés à la surface du système par imprégnation, notamment de métaux précieux, du type de ceux connus à ce jour pour favoriser l'oxydation des CO, COV ou HC, notamment ceux à base de Pt, Pd, Rh.

Selon un autre aspect de l'invention, notamment si le système catalytique comprend un unique métal D du type Pt ou Pd, il peut être néanmoins envisagé selon la présente invention d'associer audit système un catalyseur de réduction, par exemple comprenant du platine, du rhodium voire d'autres métaux tels que Cu, Ni, Fe par les techniques classiques d'imprégnation.

Le système catalytique est de préférence sous forme d'une poudre typiquement de diamètre médian de 0,1 à 300 micromètres, en particulier de préférence 150 à 250 micromètres ou alternativement de 0,1 à 50 micromètres, tel que mesuré par les techniques bien connues de granulométrie laser.

Le système catalytique utilisé selon l'invention peut être disposé sur un support selon différents modes possibles, selon toute technique connue de l'art.

Le dépôt de la poudre d'oxyde, notamment sur un support, peut par exemple être effectué à partir d'une suspension aqueuse comprenant entre 1 et 60% en masse de l'oxyde selon l'invention. Un diamètre médian de la population de grains d'oxyde selon l'invention à une taille inférieure à 1 micron est préférable et obtenue par broyage en tourne-jarre. La dispersion peut éventuellement être améliorée par l'ajout d'un dispersant, comme par exemple le dispersant ProxB03® fourni par la société Syntron ou alternativement par l'ajustement du pH de la suspension aqueuse. Le dépôt peut être réalisé selon les méthodes classiques.

Des structures de type lit de poudre, par exemple, peuvent comporter de la poudre d'oxyde constituée par ou incorporant le système catalytique selon l'invention.

Des structures inorganiques, filtrantes ou non, formées de parois poreuses en matériau inorganique, par exemple un matériau céramique ou des structures de type mousse sont aussi susceptibles d'être constituées par un oxyde mixte de cérium répondant à la formulation du système catalytique selon l'invention, telle que précédemment décrite.

Selon un mode alternatif d'utilisation de l'oxyde selon l'invention, celui-ci peut être supporté par une structure inorganique constituée dans un autre matériau. En particulier selon un mode de réalisation possible, une structure inorganique poreuse faite dans un autre matériau est imprégnée avec une solution aqueuse comportant des particules de l'oxyde mixte de cérium répondant à la formulation molaire selon l'invention.

Par exemple, le matériau inorganique constituant tout ou partie de la structure inorganique est choisi parmi la liste suivante, seul ou en combinaison : métal ou métal fritté, Cordiérite, Titanate d'Aluminium, Alumine, mullite, Nitrure de silicium, Carbure de Silicium, zircone dopée ou non-dopée. Des structures en matériau inorganique conducteur électronique tels que le Carbure de Silicium ou des métaux permettant de régénérer le système catalytique par polarisation.

Le système catalytique tel que décrit précédemment peut avantageusement être utilisé dans une structure de dépollution et/ou de filtration d'un gaz chargé en polluants gazeux et éventuellement en particules solides, notamment un gaz d'échappement d'un véhicule automobile, constituée en un matériau inorganique poreux sur lequel est déposé ledit système catalytique.

L'invention se rapporte aussi à un procédé de mise en oeuvre de l'oxyde répondant à la formulation molaire selon l'invention. Selon un premier mode de réalisation, des précurseurs des éléments Ce, M, A et D, de préférence sous forme de sels, en particulier sous forme de nitrates pour les éléments Ce, M et D, sont mélangés dans un solvant.

Afin d'obtenir l'insertion selon l'invention de l'élément D dans le réseau cristallin de l'oxyde, il importe que le précurseur de l'élément D ne soit pas réduit chimiquement lors de l'opération de mélange des réactifs initiaux et avant l'étape de calcination. Le solvant est donc choisi de telle manière que les précurseurs du groupe D ne soient pas réduits sous forme métallique.

Une telle réduction des précurseurs de l'élément D vers l'état métallique peut être vérifiée le plus souvent par l'apparition dans la solution d'un précipité de couleur sombre. La turbidité de la solution peut notamment être déterminée précisément par les techniques de diffusion de lumière quasiment élastique, par exemple grâce à un appareil de type Malvern « zetasizer » nano S.

Après évaporation du solvant à une température comprise entre 50°C et 70°C sous vide primaire puis séchage entre 60 et 120°C, le mélange sec est calciné à une température inférieure à 800°C. Afin d'obtenir une surface spécifique élevée la calcination est ménagée afin d'éviter une combustion ou une auto inflammation. Une tel procédé permet notamment d'obtenir une surface spécifique élevée supérieure à 15m²/g voire supérieure à 50m²/g selon la méthode BET. Le produit est ensuite soumis à un traitement de réduction. Cette étape de réduction est réalisée sous atmosphère réductrice, de préférence contenant de l'hydrogène, sous une pression normale, à une température inférieure à 700°C, de préférence entre 200 et 500°C, pendant un palier de 30 minutes à 2 heures, de préférence 1 heure ou moins. Cette étape permet d'éliminer une partie des oxygènes non seulement en surface mais également dans tout le volume de l'oxyde, avec création de lacunes d'oxygène dans tout le réseau cristallin. Sans que cela puisse etre considéré comme une affirmation définitive, une hypothèse est qu'un tel traitement thermique, dans les conditions précitées, permet de libérer des électrons par réduction partielle d'une partie des cations de l'élément à plusieurs degrés de valence A. Une telle réduction rendrait conducteur électronique ledit oxyde sans déstabiliser la structure initiale de la cérine (fluorite) et augmenterait sensiblement la performance catalytique dudit oxyde. Un tel mécanisme pourrait expliquer l'obtention selon l'invention de températures T₂₀ inférieures à 50°C, voire 30°C, le T₂₀ étant la température à laquelle on obtient 20% de conversion de l'espèce polluante.

La présente invention se rapporte aussi à différentes utilisations du système catalytique tel que précédemment décrit.

Selon un premier aspect, le système catalytique peut être utilisé comme catalyseur d'une réaction d'oxydation des COV ou des HC, ou du CO en CO₂, ou du NOx en NO₂. Dans une telle utilisation, on choisira de préférence l'élément D parmi Pt, Pd, Rh, Ag, Co et Au.

Selon un autre aspect, le système catalytique peut être utilisé comme catalyseur de réduction des NOx et en particulier des NO₂ en N₂. Dans une telle utilisation, on choisira de préférence l'élément D parmi Pt, Rh, Cu, Ni et Fe.

L'invention trouve également son application dans les structures utilisées pour la purification de l'air notamment dans les habitations ou dans les habitacles et en particulier des véhicules motorisés.

La présente invention peut aussi être utile pour la dépollution d'un gaz d'échappement d'un moteur notamment automobile, en particulier d'un moteur diesel. De telles structures, généralement désignées sous le terme nid d'abeille voire filtres à particules dans le cas de structures filtrantes, comprennent au moins un et de préférence une pluralité de blocs monolithiques en nid d'abeille. A la différence des dispositifs de purification précédemment décrits, dans de tels filtres, le ou lesdits blocs comprenant un ensemble de conduits ou canaux adjacents d'axes parallèles entre eux séparés par des parois poreuses, obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses. Des exemples de telles structures assemblées ou non assemblées sont par exemple décrits dans les publications EP 0816065, EP 1142619, EP1306358 ou encore EP 1591430.

La présente invention se rapporte en outre à l'utilisation du système catalytique tel que précédemment décrit pour la dépollution d'un gaz issu :
- des systèmes de combustion pour la production d'énergie;
- les systèmes de combustion dans le tertiaire et le résidentiel, notamment les systèmes de chauffage produisant des gaz à traiter comme CO, les HC, les COV voire les NOx;
- les systèmes de combustion dans l'industrie en particulier les industries verrière, sidérurgique, cimentière;
- les transports terrestres, maritimes et aériens;
- le traitement des déchets, en particulier les incinérateurs.

La présente invention se rapporte également à la dépollution de l'air intérieur et/ou extérieur.

Selon une autre voie possible, l'invention se rapporte en outre à l'utilisation du système catalytique tel que précédemment décrit pour la réalisation d'un réacteur catalytique de synthèse de gaz, notamment à un réacteur à membrane.

L'invention et ses avantages seront mieux compris à la lecture des exemples non limitatifs qui suivent :

### Exemple 1 (selon invention):

Un oxyde de composition générale Ce_{0,74}Y_{0,2}Ti_{0,05}Pt_{0,01}O₂ est d'abord préparé par mélange des réactifs donnés ci-après, dans des proportions calculées pour obtenir dans le mélange initial, en moles : 0,2 partie de Y, 0,74 partie de Ce, 0,05 partie de Ti, 0,01 partie de Pt.

Les réactifs suivants sont utilisés :
- le nitrate d'yttrium hexahydraté : Y(NO)₃, 6H₂O,
- le nitrate de cérium hexa hydraté Ce(NO₃)₃, 6H₂O,
- l'isopropoxyde de titane Ti(OC₃H₅)₄,
- le nitrate de platine Pt(NO₃)₂,
- l'acide acétique glacial.

Dans un premier temps, on dissout les précurseurs dans l'isopropanol. Les précurseurs, en proportions calculées afin d'obtenir le composé Ce_{0,74}Y_{0,2}Ti_{0,05}Pt_{0,01}O₂, sont dissous dans de l'isopropanol ultra-pur à température ambiante et sous agitation. Un apport d'acide acétique au mélange est réalisé avant l'ajout de l'isopropoxyde titane. Pour une synthèse de 5 g de composé on ajoute environ 30 ml d'isopropanol. La solution obtenue est ensuite mise à l'évaporateur rotatif à 60°C sous une pression réduite (Pₐₜₘ/800 mbar) pour évaporer l'isopropanol. Le liquide visqueux ainsi obtenu est versé dans un creuset en alumine et mis au séchage à 100°C pendant 48h.

Dans un deuxième temps, un traitement de décomposition des nitrates est réalisé. Ce traitement consiste en un chauffage sous air jusqu'à 500°C avec une rampe de chauffage de l'ordre de 50°C/h. Le composé oxyde obtenu, de composition Ce_{0,74}Y_{0,2}Ti_{0,05}Pt_{0.01}O₂, présente une couleur marron après broyage manuel au mortier.

Sa surface spécifique mesurée selon la méthode BET est d'environ 80 m²/g.

Selon une deuxième étape, l'oxyde est ensuite traité pour l'obtention du système catalytique selon l'invention, c'est-à-dire réduit, dans des conditions permettant l'obtention d'un état très déficitaire en ions oxygène du réseau cristallin de l'oxyde. Plus précisément, l'oxyde est soumis une réduction sous H₂ pur (> 99,99% massique) à une température excédant ou proche de 300°C et pendant une durée suffisante (au moins une heure) pour l'obtention d'un état très déficitaire en oxygène, c'est-à-dire d'un oxyde de formulation générale Ce_{0,74}Y_{0,2}Ti_{0,05}Pt_{0,01}O₂₋ₓ (x>0).

Des mesures EXAFS et XPS montrent qu'aussi bien avant qu'après le traitement de réduction le platine n'est présent que sous forme ionique. Tout particulièrement, les mesures effectuées démontrent l'absence de platine métallique (degré d'oxydation du Pt égal à 0). De tels résultats indiquent :
- que tout le platine initial est inséré (et reste inséré) dans le réseau cristallin du système catalytique selon l'invention et
- la forte stabilité d'une telle structure, le traitement sous une atmosphère réductrice à 300°C n'ayant pas eu pour effet de transformer le Pt en Pt métallique.

### Exemple 2 (comparatif):

Dans cet exemple, on reproduit la même procédure que celle décrite dans l'exemple 1 précédent, mais sans l'ajout d'isopropoxyde de titane Ti.

### Exemple 3 (comparatif):

Dans cet exemple, on reproduit la même procédure que celle décrite dans l'exemple 1 précédent mais sans l'ajout de nitrate d'yttrium tétrahydraté.

### Exemple 4 (selon l'invention):

Dans cet exemple, on reproduit la même procédure que celle décrite dans l'exemple 1 précédent, mais on remplace la solution d'isopropoxide de titane par une solution de nitrate de Fer. On obtient une poudre de composition Ce_{0,75}Y_{0,2}Fe_{0,05}Pt_{0,01}O₂.

### Exemple 5 (comparatif):

Dans cet exemple, on a imprégné une poudre d'un oxyde de composition Ce_{0,75}Y_{0,2}Ti_{0,05}O₂ avec 0,01% molaire de platine (sous forme de nitrate), de manière à obtenir un ratio Pt/Ce sensiblement identique à celui de l'oxyde « massique » décrit dans l'exemple 1. Le traitement de réduction est ensuite réalisé dans les conditions similaires à l'exemple. Selon ce mode de réalisation le Pt n'est pas inséré dans le réseau cristallin de l'oxyde mais seulement disposé à la surface des particules d'oxyde de composition Ce_{0,75}Y_{0,2}Ti_{0,05}O₂, le platine étant réduit par le traitement de réduction.

### Exemple 6 (comparatif):

Dans cet exemple, on a imprégné des billes d'alumine poreuses de 150 m²/g de surface spécifique et 0,45 ml/g de volume poreux avec une solution de nitrate d'yttrium, nitrate de cérium, isopropoxide de titane et nitrate de platine dans l'isopropanol. Les précurseurs, introduits dans les mêmes proportions que décrit dans l'exemple 1, sont dissous dans de l'isopropanol ultra-pur à température ambiante et sous agitation. La solution obtenue est ensuite mélangée avec les billes d'alumine et l'isopropanol. Le mélange est séché à l'étuve à 100°C pour compléter l'imprégnation par les billes d'alumine avant la calcination à 500°C.

### Test de conversion du CO

Les échantillons des exemples selon l'invention et comparatifs précédents, broyés sous forme d'une poudre tamisée entre 125 et 250 microns, sont placés dans un réacteur en quartz à lit fixe. Plus précisément, 100 mg ou 200 mg du système catalytique sont introduits dans le réacteur, équipé d'un fritté poreux en quartz supportant la poudre. Le volume du catalyseur est de l'ordre 0,15 - 0,25 cm³. Le catalyseur mis sous courant de He (10 L/h à la pression atmosphérique et température ambiante. Puis un mélange réactionnel composé d'un mélange CO/O₂/He est introduit sur le catalyseur selon un débit total de 10 L/h et une vitesse volumique horaire de 50 000 h⁻¹. Le mélange gazeux comprend initialement 10000 ppm de O₂, 6000 ppm de CO. La température du réacteur dans lequel est placé le lit de poudre est augmentée progressivement de l'ambiant à 300°C selon une vitesse de rampe 2°C/min.

Une analyse des gaz en ligne est assurée par un microchromatographe (Agilent, R-3000) équipé de deux voies d'analyse en parallèle, chacune disposant d'un micro-détecteur catharométrique (TCD). La première voie, tamis moléculaire (5A, 14 m de longueur et 10,32 mm de diamètre) est équipée d'une pré-colonne (Back-flush) permettant de séparer les petites molécules (O₂, CO). La seconde voie est équipée d'une colonne PLOT U (6 m x 0,32 mm) utilisée pour séparer les molécules plus grosses comme le dioxyde de carbone.

Des tests d'oxydation des COV (formaldéhydes) ont été réalisés à température ambiante. Ces tests ont montré sur le produit de l'invention une élimination totale de cette espèce, de façon immédiate et persistante sur plusieurs heures.
Les résultats obtenus sont exposés dans le tableau 1 qui suit. Dans la première colonne, on indique selon quel exemple la poudre du système catalytique est synthétisée et dans la seconde colonne la quantité utilisée de ce catalyseur dans le réacteur, en milligrammes :

**Tableau 1**

| Echantillon selon | Quantité de poudre (mg) | Surface Spécifique (m²/g) | Température à laquelle on obtient 50% de Conversion CO en CO₂ (°C) | Température à laquelle on obtient 20% de Conversion CO en CO₂ (°C) |
|---|---|---|---|---|
| Exemple 1 | 200 | 80 | 64 | 45 |
| Exemple 1 | 100 | 80 | 85 | 50 |
| Exemple 2 (Comparatif) | 200 | 64 | 75 | 56 |
| Exemple 3 (Comparatif) | 200 | / | 100 | 76 |
| Exemple 4 | 200 | 60 | 70 | 53 |
| Exemple 5 (Comparatif) | 100 | 80 | 98 | 75 |
| Exemple 6 (Comparatif) | 100 | / | 122 | 92 |

Les résultats obtenus, notamment ceux reportés dans le tableau 1 montrent que l'exemple 1 selon l'invention présente des T₂₀ et T₅₀ plus faibles, donc une activité catalytique plus importante à basse température que les exemples comparatifs 2 et 3 n'incorporant pas respectivement les éléments Yttrium ou Titane dans leur réseau cristallin.

Des essais de vieillissement ont montré par ailleurs que le système selon l'invention reste catalytiquement actif à un niveau sensiblement équivalent à celui décrit précédemment après plusieurs cycles de fonctionnement.

La substitution de l'élément Ti (exemple 1) par l'élément Fe (exemple 4) dans la composition de l'oxyde permet d'obtenir un niveau de performance catalytique proche, bien qu'un peu inférieur.

Les résultats comparés de l'exemple 5 selon l'art antérieur (obtenu par imprégnation de l'oxyde avec du Pt) et de l'exemple 1 (dans lequel le platine est sous forme cationique dans le réseau cristallin selon l'invention) montre, pour une même quantité de catalyseur utilisé, que la performance catalytique est sensiblement moindre lorsque le platine n'est pas inséré dans le réseau cristallin de l'oxyde mais adsorbé à sa surface, sous forme métallique.

L'exemple 6, par comparaison avec l'exemple 1, montre, pour une même quantité de catalyseur utilisé, qu'un dépôt des mêmes précurseurs que ceux utilisés pour la formation de l'oxyde selon l'invention, mais sur un support à haute surface spécifique type bille d'alumine conduit de façon inattendue à des performances dégradées comparées à celles d'un lit d'une poudre de particules formée uniquement par l'oxyde selon l'invention. Un système catalytique constitué uniquement par l'oxyde selon l'invention peut donc être préférentiellement déposé directement sur le substrat, sans la présence nécessaire d'un matériau support de grande surface spécifique, typiquement du type billes d'alumine de 100 à 200 m²/g.

## Revendications

1. Système catalytique convenant notamment pour l'élimination des CO, ledit système étant constitué par un oxyde de structure cristalline fluorite répondant à la formulation molaire:
Ce₁₋ᵤM_{y}A_{z}DᵥO₂₋ₓ,
dans lequel :
- Ce est le Cérium,
- u est compris entre 0,05 et 0,45,
- M représente au moins un élément choisi parmi : Gd, Y, Sc, Sm, Nd, Pr, Zn,
- y est compris entre 0,01 et 0,4,
- A représente au moins un élément possédant plusieurs degrés d'oxydation choisi parmi : Ti, Ga, In, V, Cr, Mn, Fe, Sn, Co, Ni, Cu,
- z est supérieur à 0 et inférieur à 0,4,
- D représente au moins un élément différent de A et choisi parmi : Pt, Pd, Rh, Ru, Cu, Fe, Ag et Au,
- v est compris entre 0,001 et 0,4.
- x est supérieur à 0,
dans lequel les métaux, en particulier les métaux précieux, sont disposés en insertion ou en substitution dans le réseau cristallin et dans lequel l'oxyde comprend des lacunes en oxygène dans son réseau cristallin.

2. Système catalytique selon l'une des revendications précédentes, dans lequel la résistivité électronique de l'oxyde est inférieure à 1000 Ohms.cm à 400°C et sa conductivité ionique est comprise entre 10⁻⁶ et 1 Siemens /cm à 400°C.

3. Système catalytique selon la revendication 1, dans lequel 1-u est égal à 1-y-z-v.

4. Système catalytique selon l'une des revendications précédentes, dans lequel M est un élément choisi parmi Gd, Y, Sc, Pr Sm, Nd.

5. Système catalytique selon l'une des revendications précédentes, dans lequel un des degrés de valence de l'élément A est 4.

6. Système catalytique selon des revendications précédentes, dans lequel l'oxyde comprend des lacunes en oxygène dans son réseau cristallin et dans lequel une partie des cations A⁴⁺ du réseau cristallin est convertie en cations A³⁺.

7. Système catalytique selon l'une des revendications précédentes, dans lequel x est inférieur à 0,5 et de préférence est compris entre 0,05 et 0,3.

8. Système catalytique selon l'une des revendications précédentes, dans lequel y est compris entre 0,05 et 0,3, de préférence entre 0,1 et 0,3.

9. Système catalytique selon l'une des revendications précédentes, dans lequel v est compris entre 0,005 et 0,2, de préférence entre 0,005 et 0,1.

10. Système catalytique selon l'une des revendications précédentes, dans lequel z est compris entre 0,01 et 0,2.

11. Système catalytique selon l'une des revendications précédentes, dans lequel A est un élément choisi parmi Ti, V, Cr, Mn, Fe, Sn, Co, Ni, Cu.

12. Système catalytique selon l'une des revendications précédentes, dans lequel D est un élément choisi parmi Pt, Pd, Rh, Ru, Cu, Fe.

13. Système catalytique selon l'une des revendications 1 à 12, dans lequel D est constituée par deux éléments différents, dont un premier élément choisi parmi Pt, Pd, Rh et un deuxième élément, différent du premier et choisi parmi Pt, Rh, Cu, Ni, Fe.

14. Système catalytique selon l'une des revendications précédentes, dans lequel M est l'Yttrium et A est le Titane, en particulier dans lequel l'oxyde répond à la formule Ce₁₋ᵤY_{y}Ti_{z}DᵥO₂₋ₓ et dans lequel y est de préférence compris entre environ 0,1 et environ 0,3 et dans lequel z est de préférence compris entre 0,01 et 0,1.

15. Poudre d'un oxyde tel que décrit dans l'une des revendications précédentes de structure cristalline fluorite répondant à la formulation molaire:
Ce₁₋ᵤM_{y}A_{z}DᵥO₂₋ₓ,
dans lequel :
- Ce est le Cérium,
- u est compris entre 0,05 et 0,45,
- M représente au moins un élément choisi parmi : Gd, Y, Sc, Sm, Nd, Pr, Zn,
- y est compris entre 0,01 et 0,4,
- A représente au moins un élément possédant plusieurs degrés d'oxydation choisi parmi : Ti, Ga, In, V, Cr, Mn, Fe, Sn, Co, Ni, Cu,
- z est supérieur à 0 et inférieur à 0,4,
- D représente au moins un élément différent de A et choisi parmi : Pt, Pd, Rh, Ru, Cu, Fe, Ag et Au,
- v est compris entre 0,001 et 0,4.
- x est supérieur à 0,
dans lequel les métaux, en particulier les métaux précieux, sont disposés en insertion ou en substitution dans le réseau cristallin et dans lequel l'oxyde comprend des lacunes en oxygène dans son réseau cristallin.

## Patentansprüche

1. Katalytisches System, insbesondere zur Eliminierung von CO geeignet, wobei das System aus einem Oxid mit Fluorit-Kristallstruktur besteht, das der folgenden molaren Formulierung entspricht:
Ce₁₋ᵤM_{y}A_{z}DᵥO₂₋ₓ,
wobei:
- Ce Cer ist,
- u zwischen 0,05 und 0,45 liegt,
- M mindestens ein Element darstellt, ausgewählt aus: Gd, Y, Sc, Sm, Nd, Pr, Zn,
- y zwischen 0,01 und 0,4 liegt,
- A mindestens ein Element darstellt, das mehrere Oxidationsstufen besitzt, ausgewählt aus: Ti, Ga, In, V, Cr, Mn, Fe, Sn, Co, Ni, Cu,
- z größer ist als 0 und kleiner ist als 0,4,
- D mindestens ein sich von A unterscheidendes Element darstellt, ausgewählt aus: Pt, Pd, Rh, Ru, Cu, Fe, Ag et Au,
- v zwischen 0,001 und 0,4 liegt,
- x größer ist als 0,
wobei die Metalle, insbesondere die Edelmetalle, zur Insertion oder Substitution im Kristallgitter vorgesehen sind, und wobei das Oxid in seinem Kristallgitter Sauerstofffehlstellen umfasst.

2. Katalytisches System nach einem der vorhergehenden Ansprüche, wobei der elektrische Widerstand des Oxids bei 400 °C kleiner ist als 1.000 Ohmcm und seine lonenleitfähigkeit bei 400 °C zwischen 10⁻⁶ und 1 Siemens/cm liegt.

3. Katalytisches System nach Anspruch 1, wobei 1-u gleich 1-y-z-v ist.

4. Katalytisches System nach einem der vorhergehenden Ansprüche, wobei M ein Element ist, ausgewählt aus Gd, Y, Sc, Pr Sm, Nd.

5. Katalytisches System nach einem der vorhergehenden Ansprüche, wobei eine der Wertigkeitsstufen von Element A 4 ist.

6. Katalytisches System nach einem der vorhergehenden Ansprüche, wobei das Oxid in seinem Kristallgitter Sauerstofffehlstellen umfasst und wobei ein Teil der Kationen A⁴⁺ des Kristallgitters in Kationen A³⁺ umgewandelt ist.

7. Katalytisches System nach einem der vorhergehenden Ansprüche, wobei x kleiner als 0,5 ist und vorzugsweise zwischen 0,05 und 0,3 liegt.

8. Katalytisches System nach einem der vorhergehenden Ansprüche, wobei y zwischen 0,05 und 0,3 liegt, vorzugsweise zwischen 0,1 und 0,3.

9. Katalytisches System nach einem der vorhergehenden Ansprüche, wobei v zwischen 0,005 und 0,2 liegt, vorzugsweise zwischen 0,005 und 0,1.

10. Katalytisches System nach einem der vorhergehenden Ansprüche, wobei z zwischen 0,01 und 0,2 liegt.

11. Katalytisches System nach einem der vorhergehenden Ansprüche, wobei A ein Element ist, ausgewählt aus Ti, V, Cr, Mn, Fe, Sn, Co, Ni, Cu.

12. Katalytisches System nach einem der vorhergehenden Ansprüche, wobei D ein Element ist, ausgewählt aus Pt, Pd, Rh, Ru, Cu, Fe.

13. Katalytisches System nach einem der Ansprüche 1 bis 12, wobei D aus zwei unterschiedlichen Elementen besteht, von denen das erste Element ausgewählt ist aus Pt, Pd, Rh und das zweite Element sich vom ersten Element unterscheidet und ausgewählt ist aus Pt, Rh, Cu, Ni, Fe.

14. Katalytisches System nach einem der vorhergehenden Ansprüche, wobei M Yttrium ist und A Titan ist, wobei insbesondere das Oxid der folgenden Formel entspricht Ce₁₋ᵤY_{y}Ti_{z}DᵥO₂₋ₓ und wobei y vorzugsweise zwischen ungefähr 0,1 und ungefähr 0,3 liegt und wobei z vorzugsweise zwischen 0,01 und 0,1 liegt.

15. Oxidpulver nach einem der vorhergehenden Ansprüche mit Fluorit-Kristallstruktur, die der folgenden molaren Formulierung entspricht:
Ce₁₋ᵤM_{y}A_{z}DᵥO₂₋ₓ,
wobei:
- Ce Cer ist,
- u zwischen 0,05 und 0,45 liegt,
- M mindestens ein Element darstellt, ausgewählt aus: Gd, Y, Sc, Sm, Nd, Pr, Zn,
- y zwischen 0,01 und 0,4 liegt,
- A mindestens ein Element darstellt, das mehrere Oxidationsstufen besitzt, ausgewählt aus: Ti, Ga, In, V, Cr, Mn, Fe, Sn, Co, Ni, Cu,
- z größer ist als 0 und kleiner ist als 0,4,
- D mindestens ein sich von A unterscheidendes Element darstellt, ausgewählt aus: Pt, Pd, Rh, Ru, Cu, Fe, Ag et Au,
- v zwischen 0,001 und 0,4 liegt,
- x größer ist als 0,
wobei die Metalle, insbesondere die Edelmetalle, zur Insertion oder Substitution im Kristallgitter vorgesehen sind, und wobei das Oxid in seinem Kristallgitter Sauerstofffehlstellen umfasst.

## Claims

1. A catalyst system suitable especially for the removal of CO compounds, said system consisting of an oxide of fluorite crystalline structure conforming to the following molar formulation:
Ce₁₋ᵤM_{y}A_{z}DᵥO₂₋ₓ,
wherein:
- Ce is cerium,
- u is between 0.05 and 0.45,
- M represents at least one element selected from the following: Gd, Y, Sc, Sm, Nd, Pr, Zn,
- y is between 0.01 and 0.4,
- A represents at least one element possessing a plurality of oxidation states and selected from the following: Ti, Ga, In, V, Cr, Mn, Fe, Sn, Co, Ni, Cu,
- z is greater than 0 and less than 0.4,
- D represents at least one element other than A and chosen from: Pt, Pd, Rh, Ru, Cu, Fe, Ag, and Au,
- v is between 0.001 and 0.4,
- x is greater than 0
wherein the metals, more particularly the precious metals, are disposed in insertion or in substitution in the crystal lattice and wherein the oxide comprises oxygen vacancies in its crystal lattice.

2. The catalyst system as claimed in either of the preceding claims, wherein the electronic resistivity of the oxide is less than 1000 ohms.cm at 400°C and its ionic conductivity is between 10⁻⁶ and 1 siemens/cm at 400°C.

3. The catalyst system as claimed in claim 1, wherein 1-u is equal to 1-y-z-v.

4. The catalyst system as claimed in any of the preceding claims, wherein M is an element selected from Gd, Y, Sc, Pr, Sm, Nd.

5. The catalyst system as claimed in any of the preceding claims, wherein one of the valences of the element A is 4.

6. The catalyst system as claimed in the preceding claims, wherein the oxide comprises oxygen vacancies in its crystal lattice and wherein some of the cations A⁴⁺ in the crystal lattice are converted to cations A³⁺.

7. The catalyst system as claimed in any of the preceding claims, wherein x is less than 0.5 and preferably is between 0.05 and 0.3.

8. The catalyst system as claimed in any of the preceding claims, wherein y is between 0.05 and 0.3, preferably between 0.1 and 0.3.

9. The catalyst system as claimed in any of the preceding claims, wherein v is between 0.005 and 0.2, preferably between 0.005 and 0.1.

10. The catalyst system as claimed in any of the preceding claims, wherein z is between 0.01 and 0.2.

11. The catalyst system as claimed in any of the preceding claims, wherein A is an element selected from Ti, V, Cr, Mn, Fe, Sn, Co, Ni, Cu.

12. The catalyst system as claimed in any of the preceding claims, wherein D is an element selected from Pt, Pd, Rh, Ru, Cu, Fe.

13. The catalyst system as claimed in any of claims 1 to 12, wherein D is composed of two different elements, of which a first is selected from Pt, Pd, Rh, and a second, which is different from the first element, is selected from Pt, Rh, Cu, Ni, Fe.

14. The catalyst system as claimed in any of the preceding claims, wherein M is yttrium and A is titanium, more particularly wherein the oxide conforms to the formula Ce₁₋ᵤY_{y}Ti_{z}DᵥO₂₋ₓ and wherein y is preferably between about 0.1 and about 0.3 and wherein z is preferably between 0.01 and 0.1.

15. A powder of an oxide as described in any of the preceding claims, of fluorite crystalline structure conforming to the following molar formulation:
Ce₁₋ᵤM_{y}A_{z}DᵥO₂₋ₓ,
wherein:
- Ce is cerium,
- u is between 0.05 and 0.45,
- M represents at least one element selected from the following: Gd, Y, Sc, Sm, Nd, Pr, Zn,
- y is between 0.01 and 0.4,
- A represents at least one element possessing a plurality of oxidation states and selected from the following: Ti, Ga, In, V, Cr, Mn, Fe, Sn, Co, Ni, Cu,
- z is greater than 0 and less than 0.4,
- D represents at least one element other than A and chosen from: Pt, Pd, Rh, Ru, Cu, Fe, Ag, and Au,
- v is between 0.001 and 0.4,
- x is greater than 0
wherein the metals, more particularly the precious metals, are disposed in insertion or in substitution in the crystal lattice and wherein the oxide comprises oxygen vacancies in its crystal lattice.
